# EUROPÄISCHE PATENTSCHRIFT

(11) **EP 0 765 271 B1**
(45) Veröffentlichungstag und Bekanntmachung des Hinweises auf die Patenterteilung: **13.05.1998**
(21) Anmeldenummer: 94925440.3
(22) Anmeldetag: 09.08.1994
(51) Int. Cl.: B64F 5/00, G05B 19/408

(54) **VERFAHREN UND ANORDNUNG ZUR OBERFLÄCHENBEARBEITUNG VON GROSSOBJEKTEN**
PROCESS AND DEVICE FOR TREATING THE SURFACE OF LARGE OBJECTS
PROCEDE ET DISPOSITIF POUR LE TRAITEMENT DE LA SURFACE D'OBJETS DE GRANDE DIMENSION

(30) Priorität: 13.08.1993 DE 4327268
(43) Veröffentlichungstag der Anmeldung: 02.04.1997
(73) Patentinhaber: PUTZMEISTER Aktiengesellschaft, 72631 Aichtal (DE)
(72) Erfinder: WANNER, Martin, D-70599 Stuttgart (DE); HERKOMMER, Thomas, Fred, D-70839 Gerlingen (DE)
(74) Vertreter: Wolf, Eckhard, Dr.-Ing.
(86) Internationale Anmeldenummer: EP9402632
(87) Internationale Veröffentlichungsnummer: WO9505309

(56) Entgegenhaltungen:
- EP-A- 0 341 134
- WO-A-93/00261
- DE-A- 2 701 823
- DE-A- 4 035 519
- US-A- 3 835 498
- US-A- 4 453 085
- US-A- 4 590 578
- US-A- 4 826 391
- DORNIER POST, 30. Juni 1993 Seiten 29 - 30 EIBERT 'GROSSES ANWENDUNGSGEBIET FUR ENTFERNUNGSBILDKAMERA'

## Beschreibung

Die Erfindung betrifft ein Verfahren zur Oberflächenbearbeitung, insbesondere Oberflächenreinigung, von Großobjekten, wie Flugzeugen, Schiffen, Bauwerken, bei welchem ein auf einem Fahrgestell angeordneter Großmanipulator in eine vorgegebene Position zum Großobjekt verfahren und dort abgestellt wird und bei welchem ein vorzugsweise als rotierender Bürstenkopf ausgebildetes Werkzeug mittels eines aus mehreren, an Dreh- und/oder Schubgelenken gegeneinander verschwenk- oder verschiebbaren Auslegern und gegebenenfalls einem am Endausleger angeordneten Multigelenk bestehenden, auf dem Fahrgestell angeordneten Knickmast über die Objektoberfläche bewegt wird. Weiter betrifft die Erfindung eine Anordnung zur Durchführung dieses Verfahrens.

In der DE-A-4035519 ist bereits vorgeschlagen worden, einen Großmanipulator mit einem fernsteuerbaren Bürstenkopf auszustatten. Der bekannte Großmanipulator weist einen aus mehreren an ihren Enden gegeneinander verschwenkbaren Auslegern zusammengesetzten Knickmast auf, dessen Grundausleger an einem auf einem motorgetriebenen Fahrgestell angeordneten Lagerbock um eine vertikale Achse drehbar gelagert ist, und dessen Endausleger ein mit dem Bürstenkopf bestückbares Multigelenk aufweist. Aus dieser Druckschrift ist es auch bekannt, den Bürstenkopf mit Sensoren auszustatten, die eine regelbare Nachführung des Bürstenkopfes gegenüber der zu bearbeitenden Oberfläche nach Maßgabe eines beim Reinigungsvorgang am Sensor auftretenden, abgreifbaren Sensorsignals ermöglichen.

Aus der Konzernzeitschrift "Dornier Post", Ausgabe 2/93, Seiten 29 und 30, ist ein Verfahren - in Zusammenhang mit einer Anordnung - der eingangs genannten Art bekannt. Diese Druckschrift beschreibt ein Verfahren zur Oberflächenreinigung von Flugzeugen, bei welchem ein auf einem Fahrgestell angeordneter Großmanipulator in eine Abstellposition innerhalb der Reichweite zum Flugzeug verfahren und dort abgestellt wird, die Lage und die Orientierung des Großobjekts bezogen auf die aktuelle Abstellposition des Großmanipulators (mit Hilfe einer Entfernungsbildkamera) ermittelt wird und ein rotierender Bürstenkopf mittels eines aus mehreren Drehgelenken und/oder Schubgelenken gegeneinander verschwenk- oder verschiebbaren Auslegern und einem am Endausleger angeordneten Multigelenk bestehenden, auf dem Fahrgestell angeordneten Knickmast entlang eines vorgegebenen, auf die aktuelle Abstellposition des Großmanipulators bezogenen Bearbeitungswegs (Waschbahn) über die Objektoberfläche bewegt wird. Beim Anfahren und Positionieren des Großmanipulators in Bezug auf das Großobjekt können hierbei jedoch Komplikationen entstehen.

Der Erfindung liegt die Aufgabe zugrunde, ein Verfahren und eine Anordnung der eingangs angegebenen Art zu entwickeln, womit auch bei ungenauer Positionierung des den Großmanipulator tragenden Fahrgestells vor dem zu bearbeitenden Großobjekt eine kollisionsfreie vollautomatische Bearbeitung auch kompliziert gestalteter Oberflächen möglich ist.

Zur Lösung dieser Aufgabe werden die in den Patentansprüchen 1 bzw. 10 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, daß bei ungenauer Positionierung des Fahrgestells zunächst eine Einmessung zur Ermittlung der aktuellen Stationskoordinaten notwendig ist und daß ein auf die aktuellen Stationskoordinaten bezogenes Bewegungsprogramm für die Gelenke des Knickmasts und/oder des Multigelenks zu erstellen ist. Dementsprechend wird gemäß der Erfindung vorgeschlagen, daß das Fahrgestell innerhalb eines begrenzten zweidimensionalen Abstellfeldes im Abstand von dem zu bearbeitenden Großobjekt stationiert wird, und daß die Gelenke des Knickmasts und/oder des Multigelenks im Zuge der Oberflächenbearbeitung nach Maßgabe einer der aktuellen Position des Fahrgestells innerhalb des Abstellfeldes zugeordneten Folge von vorgegebenen Gelenkkoordinatensätzen angesteuert werden und das Werkzeug dabei entlang einem vorgegebenen Bearbeitungsweg über die Objektoberfläche bewegt wird.

Eine bevorzugte Ausgestaltung der Erfindung sieht dabei vor, daß das Abstellfeld durch ein begrenztes zweidimensionales Entfernungsraster unterteilt wird, daß zu jedem Rasterpunkt des Entfernungsrasters eine Folge von Stützpunkten eines Bearbeitungswegs des Werkzeugs definierenden Gelenkkoordinatensätzen vorgegeben und als Gelenkkoordinatendatei in einer Datenbank einer Datenverarbeitungsanlage abgespeichert wird, und daß die positionsbezogenen Gelenkkoordinatensätze vorzugsweise durch Interpolation aus den in der Datenbank abgespeicherten Gelenkkoordinatendateien nach Maßgabe der aktuellen Position des Fahrgestells innerhalb des Entfernungsrasters berechnet und als Arbeitsdatei abgespeichert werden, bevor die Oberflächenbearbeitung unter Verwendung der aus der Arbeitsdatei ausgelesenen Gelenkkoordinatensätze und gegebenenfalls zusätzlicher bewegungsbezogener Parameter ausgelöst wird. Die aus der Arbeitsdatei ausgelesenen Gelenkkoordinatensätze können nach Maßgabe von vorzugsweise an jedem Stützpunkt des Bearbeitungsweges abgefragten Sensorsignalen nachgeführt werden. Zu diesem Zweck kann beispielsweise der an dem Werkzeug angreifende Reibungs- oder Torsionswiderstand oder der Anpreßdruck gemessen und als Sensorsignal zur Nachführung der Gelenkkoordinaten abgegriffen werden. Entsprechend können auch andere physikalische Größen, z.B. der Abstand des Werkzeugs vom Objekt oder eine sich aufgrund von Deformationen des Unterbaus ergebende variable Neigung des Großmanipulators, gemessen und als Sensorsignal abgegriffen werden. Um auch beim Nachführen der Gelenkkoordinaten unerwünschte Kollisionen zu vermeiden, ist es zweckmäßig, die nachgeführten Gelenkkoordinatensätze durch Vergleich mit zu benachbarten Rasterpunkten des Entfernungsrasters abgespeicherten Gelenkkoordinaten unter Berücksichtigung vorgegebener Toleranzgrenzen hinsichtlich Kollisionsfreiheit zu überprüfen.

Bei einer bevorzugten Anordnung zur Durchführung des erfindungsgemäßen Verfahrens, bei welcher der Großmanipulator einen aus mehreren an Drehgelenken mittels hydraulischer oder motorischer Antriebsaggregate gegeneinander verschwenkbaren Auslegern bestehenden, auf einem Drehlagerbock eines motorgetriebenen Fahrgestells mit seinem Grundausleger um eine Hochachse drehbar gelagerten Knickmast und ein am Endlausleger des Knickmasts oder am freien Ende eines am Endausleger angeordneten, mehrere Schub- und/oder Drehgelenke aufweisenden Multigelenks angeordnetes, vorzugsweise als rotierender Bürstenkopf ausgebildetes Werkzeug aufweist, wird zur Lösung der vorstehend angegebenen Aufgabe vorgeschlagen, daß am Fahrgestell eine gegen das zu bearbeitende Großobjekt ausrichtbare optoelektronische Entfernungsbildkamera angeordnet und eine mit den Entfernungsbildsignalen der Entfernungsbildkamera beaufschlagte, rechnergestützte Auswerteelektronik als Anfahr- und Positionierhilfe und zur Einmessung des Großmanipulators relativ zu dem zu bearbeitenden Großobjekt vorgesehen ist. Die Entfernungsbildkamera ist dabei zweckmäßig in der Nähe des Drehlagerbocks starr oder beweglich, insbesondere um eine Hochachse schwenkbar und/oder um mindestens eine Horizontalachse neigbar am Großmanipulator angeordnet.

Um eine Zuordnung zwischen den durch die Entfernungsbildkamera ermittelten Koordinaten und den Werkzeugkoordinaten des Knickmastes herzustellen, weist die Auswerteelektronik gemäß der Erfindung ein Programmteil zur Normalisierung der Gelenkkoordinaten des Knickmasts nach Maßgabe der unmittelbar und über die Elektronenbildkamera relativ zu einem ortsfesten, vorzugsweise kubischen Eichkörper gemessenen Werkzeugkoordinaten auf. Bei dieser Normalisierung werden Positionsfehler des Großroboters bedingt durch Deformationen der Ausleger, Nullagen-Offset der Winkel- und Wegaufnehmer und Verwindungen im Unterbau des Knickauslegers und des Fahrgestells ermittelt.

Die Auswerteelektronik weist ferner zweckmäßig eine Speicheranordnung zur Abspeicherung von Referenzbilddaten markanter Ausschnitte des Großobjekts aus der Sicht eines vorgegebenen Abstellfeldes sowie eine Softwareroutine zum Vergleich der bei in Reichweite des Knickmasts vor dem Großobjekt positioniertem Großmanipulator von der Entfernungsbildkamera aufgenommenen Entfernungsbilddaten mit den Referenzbilddaten und koordinatenmäßiger Zuordnung der Großmanipulatorposition innerhalb des vorgegebenen begrenzten Abstellfeldes auf. Vorteilhafterweise ist das Abstellfeld durch ein zweidimensionales Entfernungsraster unterteilt, wobei jedem Rasterpunkt des Entfernungsrasters eine Gelenkkoordinatendatei bzw. ein Bewegungsprogramm innerhalb einer Datenbank zugeordnet ist, worin eine Folge von Gelenkkoordinatensätzen des Knickmasts entlang einem vom Werkzeug auf der Objektoberfläche zu durchlaufenden Bearbeitungsweg abgespeichert ist.

Zur Messung der Gelenkkoordinaten ist vorzugsweise jedem Gelenk des Knickmasts und gegebenenfalls des Multigelenks ein Koordinatenaufnehmer, vorzugsweise in Form eines Winkel- oder Wegaufnehmers zugeordnet, an dessen Ausgang die betreffende Gelenkkoordinate abgreifbar ist.

Vorteilhafterweise weist die Auswerteelektronik ein Programm zur Berechnung und Abspeicherung einer für den Bearbeitungsvorgang bestimmten Folge von positionsbezogenen Gelenkkoordinatensätzen durch Interpolation aus den abgespeicherten Gelenkkoordinatensätzen nach Maßgabe der Abweichung der aktuellen Position des Großmanipulators von den nächstliegenden Rasterpunkten innerhalb des vorgegebenen Entfernungsrasters auf.

Für die Durchführung des Bearbeitungsvorgangs weist die Auswerteelektronik einen rechnergestützten Schaltungsteil zur Ansteuerung der Antriebsaggregate der Knickmastgelenke nach Maßgabe der Abweichung der an den Koordinatenaufnehmern augenblicklich abgegriffenen Gelenkkoordinaten von den zugehörigen Werten der abgespeicherten Gelenkkoordinatensätze auf. Um Toleranzabweichungen kompensieren zu können, weist das Werkzeug einen auf den Abstand von der zu bearbeitenden Oberfläche, seinen Bearbeitungswiderstand oder seine Eindringtiefe in die zu bearbeitende Oberfläche ansprechenden Sensor auf, wobei von dem Sensorsignal Korrektursignale zur Nachführung der Antriebsaggregate der Knickmastgelenke ableitbar sind.

Um dazuhin Deformationen des Unterbaus des Großmanipulators während des Waschvorgangs kompensieren zu können, ist den Schwenk- und/oder Neigungsachsen der Entfernungsbildkamera mindestens ein Neigungsgeber zugeordnet, von dessen Ausgangssignalen Korrektursignale zur Nachführung der Antriebsaggregate ableitbar sind.

Im folgenden wird die Erfindung anhand eines in der Zeichnung in schematischer Weise dargestellten Ausführungsbeispiels näher erläutert. Es zeigen:
- Fig. 1: eine Seitenansicht eines fahrbaren Großmanipulators mit einem Bürstenkopf zum Waschen von Flugzeugen in eingeklappter Stellung;
- Fig. 2 a und b: zwei schaubildliche Darstellungen des Großmanipulators in Bearbeitungsposition vor einem Flugzeug;

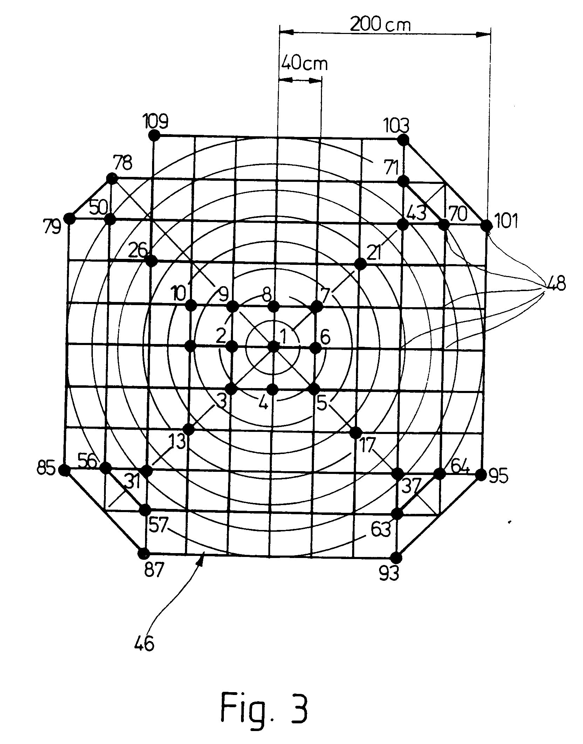

- Fig. 3: eine Draufsicht auf das aufgerasterte Abstellfeld für den Großmanipulator nach Fig. 2 a und b.

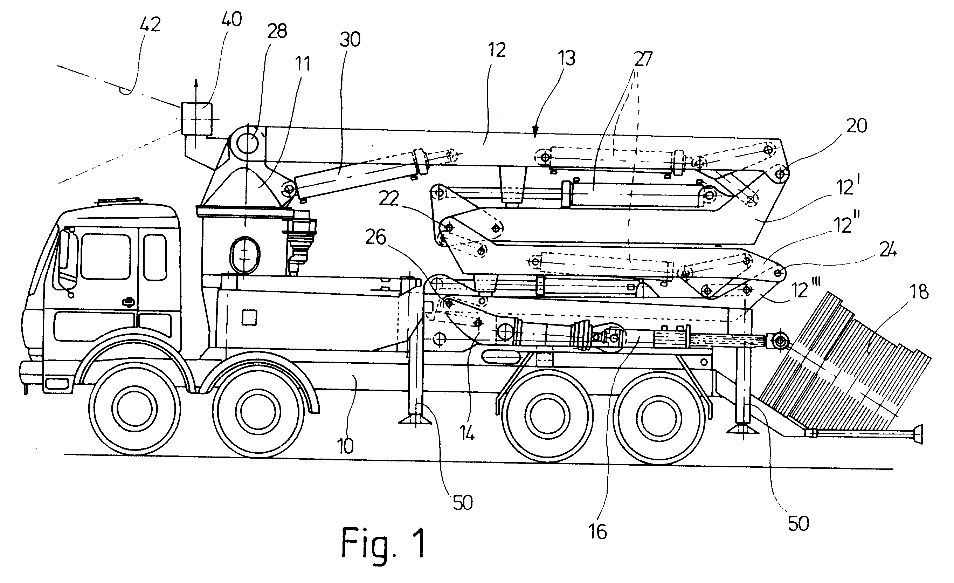

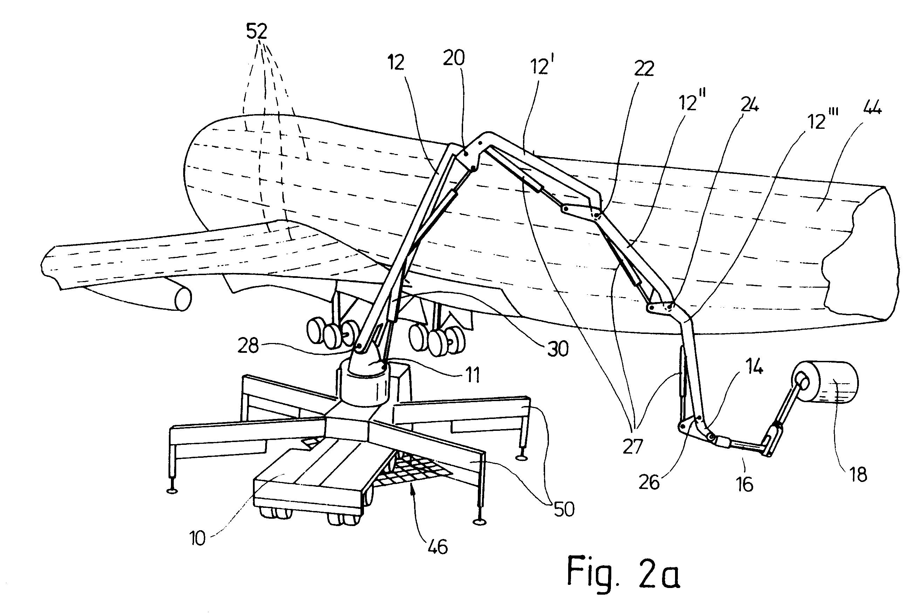

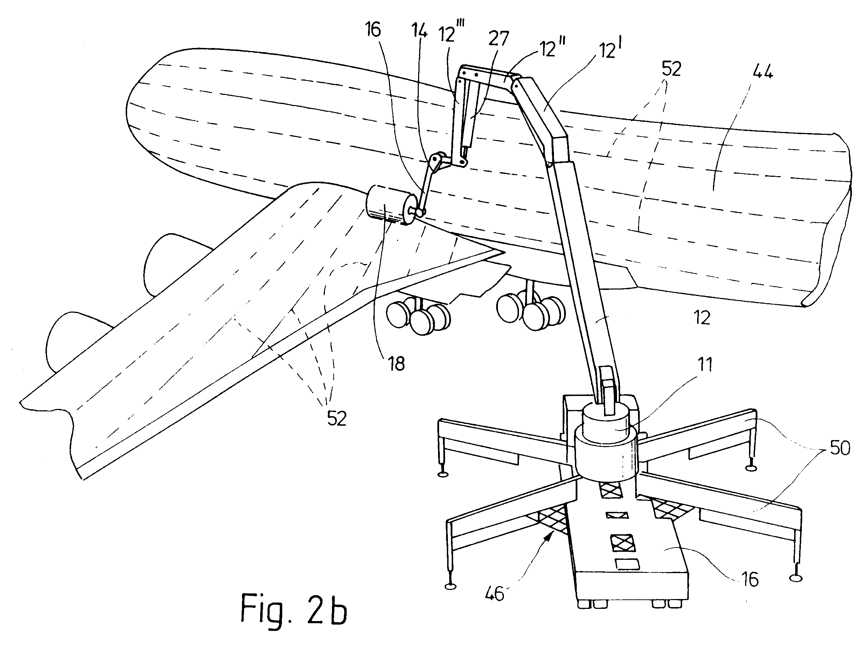

Der in Fig. 1 und 2 dargestellte mobile Großmanipulator besteht im wesentlichen aus einem auf einem Drehlagerbock 11 eines motorgetriebenen Fahrgestells 10 mit seinem Grundausleger 12 um eine vertikale Achse drehbar gelagerten Knickmast 13, einem am Endausleger 14 des Knickmasts 13 angeordneten Multigelenk 16 und einem am freien Ende des Multigelenks lösbar befestigten Bürstenkopf 18. Die fünf Ausleger 12, 12', 12'', 12''' und 14 des Knickmasts 13 sind an ihren einander zugewandten Enden an Gelenken 20, 22, 24, 26 um horizontale Achsen begrenzt verschwenkbar miteinander verbunden. Das Verschwenken erfolgt mittels Hydrozylindern 27, die an geeigneten Stellen zwischen den Auslegern angeordnet sind. Der Grundausleger 12 ist an einem horizontalen Lager 28 mittels eines Hydroantriebs 30 schwenkbar am Drehlagerbock 11 gelagert. Diese Anordnung ermöglicht es, mit dem Bürstenkopf 18 beliebige Oberflächenkonturen innerhalb der von den Auslegern aufgespannten Ebene abzufahren. Mit Hilfe des motorisch verstellbaren Multigelenks 16 ist es zudem möglich, den Bürstenkopf 18 um mehrere Dreh- und Schubachsen gegenüber dem Endausleger 14 in sechs Freiheitsgraden zu bewegen.

Im Bereich des Drehlagerbocks 11 ist eine optoelektronische Entfernungsbildkamera 40 in Form eines 3-D-Laserscanners angeordnet, die einen dreidimensionalen Raum innerhalb des Blickfensters 42 erfaßt und bezüglich der Entfernung von einem Meßobjekt 44 digitalisiert. Die Entfernungsbildkamera 40 ist in ausreichender Höhe über dem Fahrgestell 10 angeordnet, um vom Blickfenster 42 signifikante Stellen des Meßobjekts 44 einmessen zu können. Die Entfernungsbildkamera 40 arbeitet mit einem Laserstrahl, der mit einer bestimmten Taktfrequenz über den Öffnungswinkel des Blickfensters 42 durchgefahren wird. Die Auswertung der Entfernungssignale, die sich aus einer Zeitdifferenzmessung ergeben, läßt erkennen, ob und in welcher Entfernung eine reflektierende Fläche vorhanden ist.

Um die Entfernungsmessung mit der Entfernungsbildkamera 40 und die Auslenkung des Knickmasts 13 unter Berücksichtigung verschiedener Knickmastkonfigurationen aufeinander abzustimmen, ist eine Normalisierung des Manipulators bezüglich der Entfernungsbildkamera 40 notwendig. Bei der Normalisierung werden die Nullagen der Manipulatorachsen 20, 22, 24, 26, 28 festgelegt. Diese Nullagen werden über eine geschlossene kinematische Kette bestimmt, die unter Verwendung eines Meßwürfels die Meßergebnisse der Entfernungsbildkamera in Beziehung setzt zu den Auslenkungen des Knickmasts. Der Meßwürfel wird dabei so orientiert, daß über die Entfernungsbildkamera 40 eine Ecke angepeilt wird und diese Ecke als Referenzpunkt für die Positionierung des Endauslegers 14 des Knickmasts 13 verwendet wird. Hierbei werden die Winkellagen der Gelenke bei einer Mehrzahl Knickmast-Konfigurationen bestimmt. Dadurch ergeben sich Parameter für ein Gleichungssystem, aufgrund dessen die Koordinatentransformation zwischen der Elektronenbildkamera 40 und dem Manipulator 13 festgelegt werden kann. Mit diesen Messungen werden die Nullagen der einzelnen Gelenke ermittelt, unter Berücksichtigung der Deformationen in den einzelnen Auslegern (12,12',12'', 12''',14), die von vornherein nicht exakt definierbar sind. Die Messungen werden bei verschiedenen Abständen des Meßwürfels von der Entfernungsbildkamera 40 durchgeführt, um die verschiedenen Konstellationen des Manipulators unter Berücksichtigung der Nullagenfehler und der Deformationen sowie der Orientierung der Entfernungsbildkamera 40 bezüglich des Manipulatorsystems zu berücksichtigen.

Um den Großmanipulator in eine Waschposition vor dem Flugzeug 44 zu bringen, muß dieser im Zuge des Anfahrvorganges definiert abgestellt werden, damit alle bei einem Waschprogramm zu durchfahrenden Oberflächenstellen in der Reichweite des Knickmasts 13 mit der Waschbürste 18 liegen. Um unnötige Komplikationen beim Anfahren und Positionieren des Großmanipulators zu vermeiden, wird in jeder Waschposition ein Abstellfeld 46 mit einem Durchmesser von etwa 4 m definiert, das seinerseits in ein rechtwinkliges Raster mit einem Rasterabstand zwischen den einzelnen Rasterpunkten 48 von 40 cm unterteilt ist. Der Rasterabstand braucht dabei nicht genauer zu sein als die Genauigkeit des zu vermessenden Objekts. Dabei ist zu berücksichtigen, daß bei Flugzeugen schon aufgrund von Toleranzen zwischen den einzelnen Exemplaren eines bestimmten Typs und aufgrund unterschiedlicher Beladung und Temperaturzustände sich Maßdifferenzen von 50 cm und mehr ergeben können.

Die über die Entfernungsbildkamera 40 erzeugten Bilddaten werden in einer Auswerteschaltung und einem Bordrechner ausgewertet. In einem Speichermedium des Bordrechners ist für jeden zu bearbeitenden Flugzeugtyp und für jedes anzufahrende Abstellfeld 46 ein signifikanter Ausschnitt des Flugzeugs 44 bezogen auf das Blickfenster 42 der Entfernungsbildkamera 40 als Referenzbild abgespeichert. Als Anfahrhilfe wird beim Anfahren des Abstellfeldes 46 von der Entfernungsbildkamera laufend ein Entfernungsbild des betreffenden Flugzeugausschnitts erzeugt und mit dem abgespeicherten Referenzbild verglichen. Daraus lassen sich Richtungs- und Positionsdaten ableiten, die dem Fahrer Anweisungen für die Fahrtrichtung und die Entfernung geben. Grundsätzlich können die sich hieraus ergebenden Abweichungssignale auch unmittelbar in Fahr- und Lenksignale für das Fahrgestell umgesetzt werden. Ziel der Anfahrhilfe ist es, den Großmanipulator auf dem Abstellfeld 46 in Reichweite des Flugzeugs 44 zu positionieren und hinsichtlich des Kurswinkels zu orientieren. Nach Erreichen des Abstellfeldes 46 wird das Fahrgestell 10 durch Ausschwenken und Absenken der Stützbeine 50 auf dem Untergrund abgestützt und dadurch relativ zum Flugzeug positioniert.

Sodann kann die Einmessung des Großmanipulators, d. h. die Bestimmung der Position innerhalb des Rasterfeldes 46 und die Orientierung relativ zum Flugzeug 44 durchgeführt werden. Dies erfolgt ebenfalls mit Hilfe der Entfernungsbildkamera 40 durch Vergleich mit einem abgespeicherten Referenzmuster. Da die Entfernungsbildkamera am Knickmast 13 angeordnet ist, muß sichergestellt sein, daß dessen Lage bei der Bestimmung des Kurswinkels mit berücksichtigt wird. Nach erfolgter Einmessung werden die Neigungsgeber an der Entfernungsbildkamera 40 erfaßt und zu Null gesetzt. Bei einer Bewegung des Knickmastes 13 wird dann der Relativwinkel aufgrund der Neigung der Standfläche im Bewegungsprogramm berücksichtigt.

Durch das Rasterfeld 46 werden fiktive Aufstellungsorte 1 bis 109 festgelegt, für die jeweils ein offline (also auf einem externen Rechner) erstelltes komplettes Waschprogramm abgelegt ist. Als Waschprogrammdaten sind eine Vielzahl von Datensätzen, die die Winkellagen eines jeden Gelenks definieren, abgespeichert (Gelenkkoordinatensätze). Mehrere derartiger Gelenkkoordinatensätze bilden einen Bearbeitungsweg 52 entlang der Flugzeugoberfläche, die den geometrischen Ort des Bürstenkopfes beim Waschvorgang definieren. Das Waschprogramm wird auf dem externen Rechner so überprüft, daß keine Kollision mit dem Objekt und mit evtl. vorhandenen Docks und Hallenteilen stattfinden kann. Der Abstand zwischen den einzelnen Koordinatenstützpunkten beträgt auf der Flugzeugoberfläche im Mittel 30 cm. Bei der Einmessung wird nun die genaue Position der Entfernungsbildkamera 40 bezüglich des Flugzeugs 44 bestimmt und damit der exakte Platz innerhalb des Rasterfelds 46. Vom nächstliegenden Rasterpunkt 48 aus werden dann die Gelenkkoordinaten durch Interpolation auf den aktuellen Standort umgerechnet. Diese Daten werden in einer Datei im Arbeitsspeicher der Manipulatorsteuerung als aktuelles Waschprogramm abgelegt, bevor das Waschprogramm über die Manipulatorsteuerung ausgelöst wird. Durch die vier Nachbarpunkte 48 innerhalb des Rasterfeldes 46 und die zugelassenen Toleranzen von beispielsweise ± 50 cm wird außerdem der Kollisionsraum der einzelnen Gelenke festgelegt. Diese vier Nachbarpunkte, umgesetzt in Gelenkkoordinaten, beschreiben also den Raum, in dem sich die Enden der Knickmastausleger bewegen dürfen.

Wenn diese Vorbereitungen getroffen sind, kann der eigentliche Waschvorgang beginnen. Hierzu wird der Knickmast zunächst über ein Ausfaltprogramm entfaltet. Durch sukzessiven Abruf der Gelenkkoordinaten aus der Arbeitsdatei erhält man Sollwerte, die durch die Waschbürste angefahren werden, wobei der Ist- und Sollwertvergleich an jedem einzelnen Gelenk durch zugeordnete Koordinatengeber erfolgt. Wegen Deformationen des Flugzeugs und des Unterbaus, Ungenauigkeiten des Verfahrens und dynamische Fehler des Geräts muß eine Feinkompensation durchgeführt werden. Um das geforderte Waschergebnis zu erzielen, muß der Manipulator mit einer Genauigkeit von ca. 10 mm hinsichtlich der vorgeschriebenen Eindringtiefe der Waschbürste in die Oberfläche verfahren werden. Dies ist nur durch eine zusätzliche Sensorik zu erreichen, die die genannten Fehler durch Messung des Anpreßdruckes und durch Zustellung der Hilfsachsen des Multigelenks 16 kompensiert. Bei den Hilfsachsen handelt es sich um eine Teleskopachse, die Positionsfehler und um eine Schwenkachse, die Orientierungsfehler des Bürstenkopfs ausgleicht.

Grundsätzlich ist es möglich, die Entfernungsbildkamera 40 auch während des Ablaufs eines Waschprogramms mitlaufen zu lassen und zur Kollisionsüberwachung einzusetzen. Die Entfernungsbildkamera 40 kann hierbei einzelne Gelenke und das Flugzeug vermessen und hinsichtlich Kollisionen kontrollieren. Dies könnte wichtig sein, wenn beispielsweise ein Meßwertaufnehmer an einem der Gelenke ausfällt und falsche Meßwerte liefert, die vom Bediener und vom Rechner nicht erkannt werden.

Zusammenfassend ist folgendes festzustellen: Die Erfindung bezieht sich auf ein Verfahren und eine Anordnung zur Oberflächenreinigung von Flugzeugen 44, bei welchem ein auf einem Fahrgestell 10 angeordneter Großmanipulator in eine vorgegebene Position innerhalb der Reichweite zum Flugzeug 44 verfahren und dort abgestellt wird und bei welchem ein rotierender Bürstenkopf 18 mittels eines aus mehreren an Dreh- und/oder Schubgelenken gegeneinander verschwenk- oder verschiebbaren Auslegern 12,12',12'',12''',14 und einem am Endausleger 14 angeordneten Multigelenk 16 bestehenden, auf dem Fahrgestell 10 angeordneten Knickmasts 13 über die Objektoberfläche bewegt wird. Um auch bei ungenauer Positionierung des Großmanipulators vor dem Flugzeug 44 einen zuverlässigen und kollisionsfreien Waschvorgang zu gewährleisten, wird der Großmanipulator innerhalb eines begrenzten zweidimensionalen Abstellfeldes 46 im Abstand vom Flugzeug 44 stationiert, während die Gelenke 20 bis 28 des Knickmasts 13 und/oder des Multigelenks 16 im Zuge der Oberflächenbearbeitung nach Maßgabe einer der aktuellen Position des Großmanipulators innerhalb des Abstellfeldes 46 zugeordneten Folge von Gelenkkoordinatensätzen angesteuert werden und der Bürstenkopf 18 dabei entlang einem vorgegebenen Bearbeitungsweg über die Objektoberfläche bewegt wird.

## Patentansprüche

1. Verfahren zur Oberflächenbearbeitung, insbesondere zur Oberflächenreinigung von Großobjekten, wie Flugzeugen, Schiffen, Bauwerken, bei welchem ein auf einem Fahrgestell (10) angeordneter Großmanipulator (13) in eine Abstellposition innerhalb der Reichweite zum Großobjekt (44) verfahren und dort abgestellt wird, bei welchem die Lage und Orientierung des Großobjekts (44) bezogen auf die aktuelle Abstellposition des Großmanipulators ermittelt wird und bei welchem ein vorzugsweise als rotierender Bürstenkopf (18) ausgebildetes Werkzeug mittels eines aus mehreren an Drehgelenken (20,22, 24,26,28) oder Schubgelenken gegeneinander verschwenk- oder verschiebbaren Auslegern (12,12', 12'',12''',14) und gegebenenfalls einem am Endausleger (14) angeordneten Multigelenk (16) bestehenden, auf dem Fahrgestell (10) angeordneten Knickmasts (13) entlang eines vorgegebenen, auf die aktuelle Abstellposition des Großmanipulators bezogenen Bearbeitungswegs (52) über die Objektoberfläche bewegt wird, **dadurch gekennzeichnet**, daß das Fahrgestell (10) innerhalb eines im Abstand vom Großobjekt angeordneten zweidimensionalen Abstellfeldes (46) mit vorgegebener Begrenzung positioniert wird, und daR die Gelenke (20 bis 28) des Knickmasts (13) und/oder des Multigelenks (16) im Zuge der Oberflächenbearbeitung nach Maßgabe eines der aktuellen Abstellposition des Großmanipulators innerhalb des Abstellfeldes (46) zugeordneten Folge von vorgegebenen Gelenkkoordinatensätzen angesteuert werden.

2. Verfahren nach Anspruch 1, **dadurch gekennzeichnet**, daß beim Anfahren des Abstellfeldes ein Entfernungsbild eines vorgegebenen Ausschnitts des zu bearbeitenden Großobjekts (44) mit einer optoelektronischen Entfernungsbildkamera (40) aufgenommen und mit einem Referenzbild dieses Ausschnitts verglichen wird, und daß die sich dabei ergebenden Abweichungen in vorzugsweise optisch und/oder akustisch anzeigbare Lenk- und Fahrsignale außerhalb des Abstellfelds (46) oder in positionsbestimmende Einmeßsignale innerhalb des Abstellfelds (46) umgesetzt werden.

3. Verfahren nach Anspruch 1 oder 2, **dadurch gekennzeichnet**, daß das Abstellfeld (46) durch ein begrenztes zweidimensionales Entfernungsraster unterteilt wird, daß zu jedem Rasterpunkt (48) des Entfernungsrasters eine Folge von die Stützpunkte eines Bearbeitungswegs des Werkzeugs (18) definierenden Gelenkkoordinatensätzen vorgegeben und als Gelenkkoordinatendatei in einer Datenbank einer Datenverarbeitungsanlage abgespeichert wird, und daß die positionsbezogenen Gelenkkoordinatensätze in einer Arbeitsdatei abgespeichert werden, bevor die Oberflächenbearbeitung unter Verwendung der aus der Arbeitsdatei ausgelesenen Gelenkkoordinatensätze und gegebenenfalls zusätzlicher bewegungsbezogener Parameter ausgelöst wird.

4. Verfahren nach Anspruch 3, **dadurch gekennzeichnet**, daß die positionsbezogenen Gelenkkoordinatensätze durch Interpolation aus den in der Datenbank abgespeicherten Gelenkkoordinatendateien nach Maßgabe der aktuellen Position des Großmanipulators (Entfernungsbildkamera 40) innerhalb des Entfernungsrasters (46) berechnet und in der Arbeitsdatei abgespeichert werden.

5. Verfahren nach Anspruch 3 oder 4, **dadurch gekennzeichnet**, daß die aus der Arbeitsdatei ausgelesenen Gelenkkoordinatensätze nach Maßgabe von vorzugsweise an jedem Stützpunkt des Bearbeitungsweges abgefragten Sensorsignalen nachgeführt werden.

6. Verfahren nach Anspruch 5, **dadurch gekennzeichnet**, daß der am Werkzeug abgegriffene Reibungswiderstand, Torsionswiderstand oder Anpreßdruck gemessen und als Sensorsignal abgegriffen wird.

7. Verfahren nach Anspruch 5, **dadurch gekennzeichnet**, daß der Abstand des Werkzeugs vom Großobjekt berührungslos gemessen und als Sensorsignal abgegriffen wird.

8. Verfahren nach Anspruch 5, **dadurch gekennzeichnet**, daß die Neigung des Großmanipulators gegenüber einem Unterbau oder gegenüber dem Objekt gemessen und als Sensorsignal abgegriffen wird.

9. Verfahren nach einem der Ansprüche 5 bis 8, **dadurch gekennzeichnet**, daß die nachgeführten Gelenkkoordinatensätze durch Vergleich mit zu benachbarten Rasterpunkten (48) abgespeicherten Gelenkkoordinaten unter Berücksichtigung vorgegebener Toleranzgrenzen hinsichtlich Kollisionsfreiheit überprüft werden.

10. Anordnung zur Oberflächenbearbeitung, insbesondere zur Oberflächenreinigung von Großobjekten, wie Flugzeugen (44), Schiffen oder Bauwerken, mit einem Großmanipulator, der einen aus mehreren an Drehgelenken (20,22,24,26,28) mittels hydraulischer oder motorischer Antriebsaggregate (30) gegeneinander verschwenkbaren Auslegern (12,12',12'', 12''', 14) bestehenden, auf einem Drehlagerbock (11) eines motorgetriebenen Fahrgestells (10) mit seinem Grundausleger (12) um eine Hochachse drehbar gelagerten Knickmast (13) und ein am Endausleger (14) des Knickmasts (13) oder am freien Ende eines am Endausleger (14) angeordneten, mehrere Schub- und/oder Drehgelenke aufweisenden Multigelenks (16) angeordnetes, vorzugsweise als rotierender Bürstenkopf (18) ausgebildetes Werkzeug aufweist, mit einer am Großmanipulator angeordneten gegen das zu bearbeitende Großobjekt (44) ausrichtbaren optoelektronischen Entfernungsbildkamera (40) und mit einer mit den Entfernungsbildsignalen der Entfernungsbildkamera (40) beaufschlagten rechnergestützten Auswerteelektronik als Anfahrhilfe für das Fahrgestell (10) und/oder zur Einmessung des Großmanipulators relativ zu dem zu bearbeitenden Großobjekt (44), **dadurch gekennzeichnet**, daß die Auswerteelektronik eine Speicheranordnung zur Abspeicherung von Referenzbilddaten des Großobjekts (44) aus der Sicht eines im Abstand vom Großobjekt angeordneten Abstellfeldes (46) mit vorgegebener Begrenzung sowie eine Softwareroutine zum Vergleich der bei in Reichweite des Knickmasts (13) vor dem Großobjekt (44) innerhalb des Abstellfeldes (46) positioniertem Großmanipulator von der Entfernungsbildkamera (40) aufgenommenen Entfernungsbilddaten mit den Referenzbilddaten unter koordinatenmäßiger Zuordnung der Großmanipulatorposition innerhalb des Abstellfeldes (46) aufweist.

11. Anordnung nach Anspruch 10, **dadurch gekennzeichnet**, daß die Entfernungsbildkamera (40) in der Nähe des Drehlagerbocks (11) starr oder beweglich, insbesondere um eine Hochachse schwenkbar und/oder um mindestens eine Horizontalachse neigbar am Großmanipulator angeordnet ist.

12. Anordnung nach Anspruch 10 oder 11, **dadurch gekennzeichnet**, daß jedem Gelenk (20 bis 28) des Knickmasts (13) und gegebenenfalls des Multigelenks (16) ein Koordinatenaufnehmer, vorzugsweise in Form eines Winkel- oder Wegaufnehmers zugeordnet ist, an dessen Ausgang ein der betreffenden Gelenkkoordinate entsprechender Wert elektrisch abgreifbar ist.

13. Anordnung nach Anspruch 12, **dadurch gekennzeichnet**, daß die Auswerteelektronik einen rechnergestützten Schaltungsteil zur Normalisierung der Gelenkkoordinaten nach Maßgabe der unmittelbar und über die Entfernungsbildkamera (40) relativ zu einem ortsfesten, vorzugsweise kubischen Eichkörper gemessenen Werkzeugkoordinaten aufweist.

14. Anordnung nach einem der Ansprüche 10 bis 13, **dadurch gekennzeichnet**, daß das Abstellfeld (46) durch ein zweidimensionales Entfernungsraster unterteilt ist, daß jedem Rasterpunkt (48) innerhalb des Entfernungsrasters (46) eine Gelenkkoordinatendatei oder ein Bewegungsprogramm innerhalb einer Datenbank zugeordnet ist, worin eine Folge von Gelenkkoordinatensätzen des Knickmasts (13) entlang einem vom Werkzeug auf der Objektoberfläche zu durchlaufenden Bearbeitungsweg abgespeichert ist.

15. Anordnung nach Anspruch 14, **dadurch gekennzeichnet**, daß die Auswerteelektronik eine Softwareroutine zur Berechnung und Abspeicherung einer für den Bearbeitungsvorgang bestimmten Folge von Gelenkkoordinatensätzen durch Interpolation aus den abgespeicherten Gelenkkoordinatensätzen nach Maßgabe der Abweichung der aktuellen Position des Großmanipulators von den nächstliegenden Rasterpunkten (48) innerhalb des vorgegebenen Entfernungsrasters (46) aufweist.

16. Anordnung nach Anspruch 14 oder 15, **dadurch gekennzeichnet**, daß die Auswerteelektronik einen rechnergestützten Schaltungsteil zur Ansteuerung der Antriebsaggregate (30) der Knickmastgelenke (20 bis 28) nach Maßgabe der Abweichung der an den Koordinatenaufnehmern abgegriffenen Gelenkkoordinaten von den zugehörigen Werten der abgespeicherten Gelenkkoordinatensätze aufweist.

17. Anordnung nach einem der Ansprüche 14 bis 16, **dadurch gekennzeichnet**, daß das Werkzeug (18) einen auf den Abstand von der zu bearbeitenden Oberfläche, auf seinen Bearbeitungswiderstand oder auf seine Eindringtiefe in die zu bearbeitende Oberfläche ansprechenden Sensor aufweist, und daß von dem Ausgangssignal des Sensors Korrektursignale zur Nachführung der Antriebsaggregate der Knickmastgelenke ableitbar sind.

18. Anordnung nach einem der Ansprüche 14 bis 17, **dadurch gekennzeichnet**, daß den Schwenk- und/oder Neigungsachsen der Entfernungsbildkamera mindestens ein vorzugsweise auf Deformationen eines Unterbaus des Großmanipulators ansprechender Neigungsgeber zugeordnet ist, von dessen Ausgangssignalen Korrektursignale zur Nachführung der Antriebsaggregate der Knickmastgelenke ableitbar sind.

## Claims

1. A process for treating, in particular for cleaning, the surface of large objects, like airplanes, ships, buildings, in which a large manipulator (13) arranged on an undercarriage (10) is moved into a parking position within reach to the large object (44) and is parked there, in which the position and orientation of the large object (44) with respect to the actual parking position of the large manipulator is determined, and in which a tool preferably designed as a rotating brush head (18) is moved over the surface of the object along a specified working path (52) referred to the actual parking position of the large manipulator by means of an articulated mast (13) which is arranged on the undercarriage (10) and consists of several arm (12, 12', 12'', 12''', 14), which are pivotal or movable with respect to one another on pivot joints (20, 22, 24, 26, 28) or thrust joints, and, if necessary, a multiple joint (16) arranged on the last arm (14), characterized in that the undercarriage (10) is positioned within a two-dimensional parking field (46) arranged spaced from the large object with a specified boundary, and that the joints (20 to 28) of the articulated mast (13) and/or of the multiple joint (16) are controlled during the surface treatment in accordance with a series of specified joint-coordinate sets, which series is associated with the actual parking position of the large manipulator within the parking field (46).

2. The process according to Claim 1, characterized in that during the approach on the parking field a distance image of a specified section of the large object (44) to be treated is taken with an opto-electronic distance camera (40) and is compared with a reference image of this section, and that the thereby resulting deviations are converted into preferably optically and/or acoustically indicatable steering and driving signals outside of the parking field (46) or into position-determining locating signals within the parking field (46).

3. The process according to Claim 1 or 2, characterized in that the parking field (46) is divided by a limited two-dimensional distance grid, that for each grid point (48) of the distance grid a series of joint-coordinate sets defining the support points of a operating path of the tool (18) is specified, and is stored as a joint-coordinate data file in a data bank of a data-processing system, and that the position-referenced joint-coordinate sets are stored in a working data file before the treatment of the surface is triggered using the joint-coordinate sets selected from the working data file and, if necessary, additional movement-referenced parameters.

4. The process according to Claim 3, characterized in that the position-referenced joint-coordinate sets are calculated through interpolation from the joint-coordinate data files stored in the data bank in accordance with the actual position of the large manipulator (distance camera 40) within the distance grid (46) and are stored in the working data file.

5. The process according to Claim 3 or 4, characterized in that the joint-coordinate sets selected from the working data file follow in accordance with sensor signals preferably extracted at each support point of the working path.

6. The process according to Claim 5, characterized in that the frictional resistance, torsion resistance or bearing pressure on the tool is measured and read as a sensor signal.

7. The process according to Claim 5, characterized in that the distance of the tool from the large object is measured without contact and is read as a sensor signal.

8. The process according to claim 5, characterized in that the inclination of the large manipulator with respect to a substructure or with respect to the object is measured and is read as a sensor signal.

9. The process according to one of the Claims 5 to 8, characterized in that guiding joint-coordinate sets are checked with respect to freedom from collisions through a comparison with joint-coordinates stored with respect to adjacent grid points (48) taking into consideration specified tolerance limits.

10. An arrangement for treating, in particular cleaning, the surface of large objects, like airplanes (44), ships or buildings, comprising a large manipulator, which has an articulated mast (13), which consists of several arms (12, 12', 12'', 12''', 14) pivotal with respect to one another on pivot joints (20, 22, 24, 26, 28) by means of hydraulic or motorized driving systems (30) and rotatably supported with its base arm (12) about a vertical axis on a pivot-bearing block (11) of a motor-driven undercarriage (10), and has a tool preferably designed as a rotating brush head (18) and arranged on the last arm (14) of the articulated mast (13) or on the free end of a multiple joint (16) arranged on the last arm (14) and having several thrust and/or pivot joints, comprising an opto-electronic distance camera (40) arranged on the large manipulator and alignable with the large object (44) to be treated, and comprising a calculator-supported evaluating electronics loaded with the distance-image signals of the distance camera (40) as an aid for positioning the undercarriage (10) and/or for locating the large manipulator relative to the large object to be treated, characterized in that the evaluating electronics has a storage arrangement for storing of reference-image data of the large object (44) viewed from a parking field (46) with a specified boundary arranged spaced from the large object, and a software routine for comparing the distance-image data taken by the distance camera with the large manipulator positioned within the reach of the articulated mast (13) in front of the large object (44) within the parking field (46) with the reference-image data with a coordinate-like association of the large-manipulator position within the parking field (46).

11. The arrangement according to Claim 10, characterized in that the distance camera (40) is arranged rigidly or movably, in particular pivotally about a vertical axis and/or inclinable about at least one horizontal axis on the large manipulator in the vicinity or the pivot-bearing block (11).

12. The arrangement according to Claim 10 or 11, characterized in that with each joint (20 to 28) of the articulated mast (13) and, if necessary, of the multiple joint (16) is associated a coordinate receiver, preferably in the form of an angle or path receiver, at the output of which a value corresponding with the respective joint coordinate can be electrically read.

13. The arrangement according to Claim 12, characterized in that the evaluating electronics has a calculator-supported circuit for normalizing the joint coordinates in accordance with the tool coordinates measured directly and through the distance camera (40) relative to a stationary, preferably cubic calibration member.

14. The arrangement according to one of the Claims 10 to 13, characterized in that the parking field (46) is divided by a two-dimensional distance grid, that with each grid point (48) within the distance grid (46) is associated a joint-coordinate data file or a moving program within a data bank, in which is stored a series of joint-coordinate sets of the articulated mast (13) along an operating path to be travelled by the tool on the surface of the object.

15. The arrangement according to Claim 14, characterized in that the evaluating electronics has a software routine for calculating and storing a series of joint-coordinate sets designated for the treatment operation through interpolation from the stored joint-coordinate sets in accordance with the deviation of the actual position of the large manipulator from the adjacent grid point (48) within the specified distance grid (46).

16. The arrangement according to Claim 14 or 15, characterized in that the evaluating electronics has a calculator-supported circuit for controlling the drive systems (30) of the articulated-mast joints (20 to 28) in accordance with the deviation of the joint coordinates read at the coordinate receivers from the associated values of the stored joint-coordinate sets.

17. The arrangement according to Claims 14 to 16, characterized in that the tool (18) has a sensor, which reacts to the distance from the surface to be treated, to its operating resistance or to its depth of penetration into the surface to be treated, and that from the output signal of the sensor correcting signals can be derived to have the driving systems of the articulated-mast joints follow.

18. The arrangement according to one of the Claims 14 to 17, characterized in that at least one inclination indicator reacting preferably to deformations in the substructure of the large manipulator is associated with the pivot and/or inclination axes of the distance camera, from the output signals of the inclination indicator there can be derived correcting signals to have the driving systems of the articulated-mast joints can follow.

## Revendications

1. Procédé pour le traitement de surfaces, notamment pour le nettoyage de surfaces, d'objets de grande dimension tels que des avions, des bateaux, des édifices, selon lequel un manipulateur de grande capacité (13) monté sur un châssis roulant (10) est amené et stationné dans une position de stationnement à portée de l'objet de grande dimension (44), selon lequel la position et l'orientation de l'objet de grande dimension (44) rapportées à la position de stationnement actuelle du manipulateur de grande capacité sont déterminées, et selon lequel un outil conformé de préférence en tête porte-brosse (18) tournante est déplacé sur la surface de l'objet, le long d'un chemin de traitement (52) prédéterminé rapporté à la position de stationnement actuelle, au moyen d'un mât articulé (13) monté sur le châssis roulant (10) et composé de plusieurs cantilevers (12, 12', 12'', 12''', 14) pouvant être pivotés ou déplacés les uns par rapport aux autres sur des articulations tournantes (20, 22, 24, 26, 28) ou des joints à glissière, et éventuellement d'une articulation multiple (16) montée sur le cantilever d'extrémité (14), **caractérisé en ce** que le châssis roulant (10) est positionné à l'intérieur d'une aire de stationnement (46) bidimensionnelle à délimitation prédéterminée, située à distance de l'objet de grande dimension, et que les articulations (20 à 28) du mât articulé (13) et/ou de l'articulation multiple (16) sont commandées au cours du traitement de surface en fonction d'une succession de jeux de coordonnées d'articulation prédéterminés associés à la position de stationnement actuelle du manipulateur de grande capacité à l'intérieur de l'aire de stationnement (46).

2. Procédé selon la revendication 1, caractérisé en ce que lors de l'approche de l'aire de stationnement, une image de distance d'une portion prédéterminée de l'objet de grande dimension (44) à traiter est enregistrée au moyen d'une caméra optoélectronique d'imagerie à distance (40) et comparée avec une image de référence de ladite portion, et que les écarts alors obtenus sont convertis en signaux de guidage et de conduite affichables de préférence de manière optique et/ou acoustique, à l'extérieur de l'aire de stationnement (46) ou en signaux d'étalonnage définissant la position, à l'intérieur de l'aire de stationnement (46).

3. Procédé selon la revendication 1 ou 2, caractérisé en ce que l'aire de stationnement (46) est subdivisée par une grille de distance bidimensionnelle limitée, que pour chaque point (48) de la grille de distance, une succession de jeux de coordonnées d'articulation définissant les points d'appui d'un chemin de traitement de l'outil (18) est prédéterminée et mémorisée comme fichier de coordonnées d'articulation dans une banque de données d'un système informatique, et que les jeux de coordonnées d'articulation rapportés à la position sont stockés dans un fichier de travail avant que le traitement de surface soit déclenché avec utilisation des jeux de coordonnées d'articulation extraits du fichier de travail et éventuellement de paramètres supplémentaires rapportés aux mouvements.

4. Procédé selon la revendication 3, caractérisé en ce que les jeux de coordonnées d'articulation rapportés à la position sont calculés à l'intérieur de la grille de distance (46) par interpolation à partir des fichiers de coordonnées d'articulation stockés dans la banque de données, en fonction de la position actuelle du manipulateur de grande capacité (caméra d'imagerie à distance 40), et stockés dans le fichier de travail.

5. Procédé selon la revendication 3 ou 4, caractérisé en ce que les jeux de coordonnées d'articulation extraits du fichier de travail sont asservis en fonction de signaux de détection captés de préférence à chaque point d'appui du chemin de traitement.

6. Procédé selon la revendication 5, caractérisé en ce que la résistance par frottement, la résistance à la torsion ou la pression appliquée prélevées sur l'outil sont prélevées comme signal de détection.

7. Procédé selon la revendication 5, caractérisé en ce que la distance entre l'outil et l'objet de grande dimension est mesurée sans contact et prélevée comme signal de détection.

8. Procédé selon la revendication 5, caractérisé en ce que l'inclinaison du manipulateur de grande capacité par rapport à une infrastructure ou à l'objet est mesurée et prélevée comme signal de détection.

9. Procédé selon l'une des revendications 5 à 8, caractérisé en ce que les jeux de coordonnées d'articulation asservis sont comparés avec des points de trame (48) voisins des coordonnée, d'articulation enregistrées, en tenant compte de limites de tolérance imposées, pour contrôler l'absence de collisions.

10. Dispositif pour le traitement de surfaces, notamment pour le nettoyage de surfaces, d'objets de grande dimension tels que des avions (44), des bateaux, ou des édifices, comprenant un manipulateur de grande capacité lequel comporte un mât articulé (13) constitué par une pluralité de cantilevers (12, 12', 12'', 12''', 14) pouvant être pivotés les uns par rapport aux autres sur des articulations tournantes (20, 22, 24, 26, 28) au moyen de groupes d'entraînement (30) hydrauliques ou motorisés, monté sur un support tournant (11) d'un châssis roulant (10) motorisé, et dont le cantilever de base (12) peut tourner autour d'un axe vertical, et par un outil avantageusement conformé en tête porte-brosse (18) tournante et monté sur le cantilever d'extrémité (14) du mât articulé (13) ou sur l'extrémité libre d'une articulation multiple (16) montée sur le cantilever d'extrémité (14) et comportant plusieurs joints à glissière et/ou articulations tournantes, une caméra optoélectronique d'imagerie à distance (40) montée sur le manipulateur de grande capacité et pouvant être orientée vers l'objet de grande dimension (44) à traiter, et une électronique d'interprétation assistée par ordinateur à laquelle sont transmis les signaux d'imagerie à distance de la caméra d'imagerie à distance (40), qui sert de dispositif auxiliaire d'approche pour le châssis roulant (10) et/ou pour l'étalonnage du manipulateur de grande capacité par rapport à l'objet de grande dimension (44) à traiter, **caractérisé en ce** que l'électronique d'interprétation comprend une mémoire pour le stockage de données d'images de référence de l'objet de grande dimension (44) visibles à partir d'une aire de stationnement (46) à délimitation prédéterminée, disposée à distance de l'objet de grande dimension, ainsi qu'une routine logicielle pour la comparaison des données d'imagerie à distance enregistrées par la caméra d'imagerie à distance (40) avec les données d'images de référence, avec association des coordonnées de la position du manipulateur de grande capacité à l'intérieur de l'aire de stationnement (46), le manipulateur de grande capacité étant positionné à portée du mât articulé (13) devant l'objet de grande dimension (44), à l'intérieur de l'aire de stationnement (46).

11. Dispositif selon la revendication 10, caractérisé en ce que la caméra d'imagerie à distance (40) est montée sur le manipulateur de grande capacité, à proximité du support tournant (11) de manière rigide ou mobile, en particulier de façon à pouvoir tourner autour d'un axe vertical et/ou à être inclinée autour d'au moins un axe horizontal.

12. Dispositif selon la revendication 10 ou 11, caractérisé en ce qu'à chaque articulation (20 à 28) du mât articulé (13) et éventuellement de l'articulation multiple (16) est associé un enregistreur de cordonnées, de préférence sous la forme d'un capteur d'angle et de déplacement, à la sortie duquel peut être prélevée électriquement une valeur correspondant à la coordonnée d'articulation considérée.

13. Dispositif selon la revendication 12, caractérisé en ce que l'électronique d'interprétation comprend un circuit assisté par ordinateur pour la normalisation des coordonnées d'articulation en fonction des coordonnées de l'outil mesurées directement et par l'intermédiaire de la caméra d'imagerie à distance (40) par rapport à un corps d'étalonnage fixe, de préférence cubique.

14. Dispositif selon l'une des revendications 10 à 13, caractérisé en ce que l'aire de stationnement (46) est subdivisée par une grille de distance bidimensionnelle, qu'à chaque point de trame (48) à l'intérieur de la grille de distance (46) est associé un fichier de coordonnées d'articulation ou un programme de mouvements à l'intérieur d'une banque de données dans lequel est stockée une succession de jeux de coordonnées d'articulation du mât articulé (13) le long d'un chemin de traitement devant être parcouru par l'outil sur la surface de l'objet.

15. Dispositif selon la revendication 14, caractérisé en ce que l'électronique d'interprétation comprend une routine logicielle pour le calcul et la mémorisation d'une succession de jeux de coordonnées d'articulation destinée à l'opération de traitement, par interpolation à partir des jeux de coordonnées d'articulation mémorisés,enfonction de l'écart entre la position actuelle du manipulateur de grande capacité et les points de trame (48) les plus proches à l'intérieur d'une grille de distance (46) prédéterminée.

16. Dispositif selon la revendication 14 ou 15, caractérisé en ce que l'électronique d'interprétation comprend un circuit assisté par ordinateur pour la commande des groupes d'entraînement (30) des articulations (20 à 28) du mât articulé en fonction de l'écart des coordonnées d'articulation prélevées sur les enregistreurs de coordonnées et les valeurs associées des jeux de coordonnées d'articulation stockés.

17. Dispositif selon l'une des revendications 14 à 16, caractérisé en ce que l'outil (18) est pourvu d'un détecteur répondant à la distance de la surface à traiter, à sa résistance d'usinage ou à sa profondeur de pénétration dans la surface à traiter, et que du signal de sortie du détecteur peuvent être dérivés des signaux de correction pour l'asservissement des groupes d'entraînement des articulations du mât articulé.

18. Dispositif selon l'une des revendications 14 à 17, caractérisé en ce qu'aux axes de pivotement et/ou d'inclinaison de la caméra d'imagerie à distance est associé au moins un inclinomètre répondant de préférence à des déformations d'une infrastructure du manipulateur de grande capacité et dont les signaux de sortie permettent de dériver des signaux de correction pour l'asservissement des groupes d'entraînement des articulations du mât articulé.
